# EUROPÄISCHE PATENTSCHRIFT

(11) **EP 1 457 368 B1**
(45) Veröffentlichungstag und Bekanntmachung des Hinweises auf die Patenterteilung: **11.07.2007**
(21) Anmeldenummer: 03290620.8
(22) Anmeldetag: 12.03.2003
(51) Int. Cl.: B60H 1/22, B60H 1/03

(54) **Heizkörper mit integrierter elektrischer Zusatzheizung**
Heat exchanger with integrated electric supplementary heating
Echangeur de chaleur avec chauffage électrique supplémentaire intégré

(43) Veröffentlichungstag der Anmeldung: 15.09.2004
(73) Patentinhaber: Behr France Rouffach SAS, 68250 Rouffach (FR)
(72) Erfinder: Brun, Michel, 68740 Rustenhart (FR); Laumonnerie, Yannik, 68250 Rouffach (FR); Lucas, Grégory, 68250 Rouffach (FR); Miss, Pascal, 67600 Sélestat (FR); Mougey, Mathieu, 68190 Ensisheim (FR); Schmittheisler, Christophe, 67680 Epfig (FR)
(74) Vertreter: Grauel, Andreas

(56) Entgegenhaltungen:
- EP-B- 0 707 434
- US-A- 6 166 351

## Beschreibung

Die Erfindung betrifft einen Heizkörper für Kraftfahrzeuge mit integrierter elektrischer Zusatzheizung nach dem Oberbegriff des Patentanspruches 1, bekannt durch EP-B 0 707 434.

Kraftfahrzeuge mit verbrauchsoptimierten Motoren, z. B. Dieselmotoren, benötigen heute vielfach eine Zusatzheizung, um die aufgrund des hohen thermischen Wirkungsgrades fehlende Heizleistung zu kompensieren. Bei diesen Zusatzheizungen, so genannten Zuheizern, haben sich insbesondere elektrische Heizungen durchgesetzt, die ihre elektrische Energie aus dem Bordnetz des Kraftfahrzeuges beziehen. Zu unterscheiden sind dabei unabhängige Zuheizer mit elektrischer Widerstandsheizung und integrierte Systeme, bei denen die elektrische Zusatzheizung in den Heizkörper einer Heizungsanlage integriert ist.

Durch die DE-A 199 11 547 und die DE-A 199 57 452 wurden solche unabhängigen Zuheizer bekannt, welche aus einem Register von Heizelementen bestehen, welche von Umgebungsluft überströmt werden, die dann in den Fahrzeuginnenraum geleitet wird. Die Erwärmung der Luft erfolgt über elektrisch beheizte PTC-Elemente, die bei steigender Temperatur ihren Widerstand erhöhen und somit selbstregelnd sind. Derartige Heizregister bedeuten ein zusätzliches Teil, welches in der Heizungsanlage des Kraftfahrzeuges untergebracht werden muss.

Man hat daher vorgeschlagen - wie durch die DE-A 44 33 814 bekannt wurde - die elektrischen Heizelemente rohrförmig auszubilden und in einen Heizkörper zu integrieren, wobei die Rohre innen von Kühlmittel durchströmt und von außen durch PTC-Elemente beheizt werden. Durch diese Lösung ergibt sich nicht nur eine Zusatzheizung für die Luft, sondern auch eine Vorwärmung des Kühlmittels in der Warmlaufphase, was bei einer Zusatzheizung nicht immer erwünscht ist.

Nach der DE-A 198 35 229 und der DE-A 198 11 629 wurden integrierte Systeme bekannt, bei welchen die Heizelemente nicht die Rohre und damit das Kühlmittel beheizen - es handelt sich vielmehr um "Blindrohre", die ihre Wärme nur nach außen an Rippen des Heizkörpers abgeben und somit die Luft erwärmen. Der Heizkörper besteht dabei aus einem Netz mit Flachrohren und Wellrippen, die miteinander verlötet sind. Nachteilig bei diesen integrierten Zusatzheizungen ist, dass der Heizkörperblock bzw. das Netz zunächst gelötet wird und dass im Anschluss an den Lötprozess die Heizelemente in entsprechende Lücken des Netzes eingesetzt werden.

Durch die EP-B 0 707 434 wurde ein Heizkörper mit einer integrierten elektrischen Zusatzheizung in Form von PTC-Heizrohren bekannt, und zwar mit einem Netz bzw. Rohr-/Rippen-Block, der sowohl gelötet als auch mechanisch gefügt ist. Mechanisch gefügt heißt in diesem Fall, dass Rohre und Rippen des Heizkörpers - ohne Löten - zu einem in sich festen Block gefügt werden, z. B. durch Aufweiten der Rohre innerhalb von Öffnungen in den Rippen. Bei dieser Zusatzheizung sind die Heizrohre als Flachrohre oder als flachovale, aufweitbare Rohre ausgebildet, d. h. mit einem länglichen Querschnitt, in welchem ebenfalls flach ausgebildete PTC-Heizelemente mittels eines Kunststoffrahmens angeordnet sind. Dieses integrierte System ist auf flache bzw. flachovale Rohrquerschnitte beschränkt, in denen die Heizelemente untergebraucht werden können. Insofern ist dieses bekannte System nicht auf alle Heizköperbauweisen, z. B. mechanisch gefertigte Rundrohrheizkörper anwendbar.

Es ist daher Aufgabe der vorliegenden Erfindung, einen Heizkörper der eingangs genannten Art dahingehend zu verbessern, dass er eine möglichst universell verwendbare Zusatzheizung aufweist, die möglichst ohne bauliche Veränderungen in den Heizkörper integrierbar ist.

Diese Aufgabe wird durch die Merkmale des Patentanspruches 1 gelöst. Erfindungsgemäß sind die Heizelemente auf einer Stirnfläche des Heizkörpers, insbesondere auf dessen Luftaustrittsseite angeordnet und durch ein elektrisch leitendes Gitter am Heizkörper befestigt. Die vorzugsweise als PTC-Elemente ausgebildeten Heizelemente sind gleichmäßig über die Stirnfläche verteilt und stehen in wärmeleitendem Kontakt mit den Rippen des Heizkörpers, sodass die von den PTC-Elementen infolge Stromdurchfluss erzeugte Wärme in die Rippen geleitet und von dort auf die Luft übertragen wird. Das Gitter ist an eine Stromversorgung angeschlossen und steht in elektrisch leitender Verbindung mit den PTC-Elementen. Das Gitter kann als Zusatzteil für den Heizkörper hergestellt und mit einfachen Mitteln am Heizkörper in der Weise befestigt werden, dass die einzelnen PTC-Elemente auf die Stirnfläche des Heizkörpers gepresst und somit gehalten werden. Der Vorteil dieser integrierten Zusatzheizung besteht darin, dass sie ohne weiteres an bestehenden, serienmäßigen Heizkörpern der verschiedensten Bauweisen angebracht werden kann, ohne dass wesentliche Veränderungen an diesen Heizkörpern vorgenommen werden müssen. Insbesondere braucht das Netz des Heizkörpers, welches aus Rohren und Rippen besteht, nicht verändert zu werden, was einerseits einen wärmetechnischen und andererseits einen erheblichen kostenmäßigen Vorteil bedeutet. Das Netz des Heizkörpers kann also sowohl gelötet als auch mechanisch gefügt sein. Die Rohre können als Flachrohre mit Wellrippen oder als aufweitbare Oval- oder Rundrohre mit flachen Rippen ausgebildet sein. In jedem Falle wird die Stirnfläche des Heizkörpers durch Stirnkanten der Wellrippen gebildet, welche in wärmeleitenden und elektrischen Kontakt mit den PTC-Elementen gebracht werden können. Dadurch ist in jedem Falle eine Wärmeleitung und ein Stromdurchfluss gewährleistet.

In vorteilhafter Ausgestaltung der Erfindung werden die PTC-Elemente in die Stirnflächen des Heizkörpers eingedrückt, wobei die Rippen bzw. ihre Stirnkanten im Bereich der PTC-Elemente verformt bzw. umgebogen werden.

Dadurch ergibt sich der Vorteil einer besseren Halterung und eines verbesserten thermischen Kontaktes, d. h. eine verbesserte Wärmeleitung.

In einer Weiterbildung der Erfindung ist zwischen dem Gitter und den PTC-Elementen ein Verbindungsmaterial angeordnet. Dadurch wird die mechanische Verbindung und der elektrische Kontakt zwischen PTC-Elementen und dem Gitter verbessert. Das Verbindungsmaterial kann beispielsweise ein Silikonkleber sein, mit dem die PTC-Elemente auf dem Gitter befestigt werden. Die PTC-Elemente können somit vorher auf dem Gitter positioniert und aufgeklebt werden, sodass das Gitter mit den Heizelementen als vorgefertigtes Teil mit dem Heizkörper montiert werden kann.

In vorteilhafter Weiterbildung der Erfindung ist auch zwischen den PTC-Elementen und der Stirnfläche des Heizkörpers ein Verbindungsmaterial angeordnet, welches einerseits die Haftung und andererseits die Wärmeleitung sowie die elektrische Leitfähigkeit verbessert. Dieses Verbindungsmaterial kann ebenso ein Silikonkleber sein, was insbesondere bei verformten Rippenenden, die sich zu einer Fläche umlegen, vorteilhaft sein kann. Andererseits können die PTC-Elemente auch mit den Rippen verlötet sein, wenn es sich um ein gelötetes Netz handelt. Dadurch ergibt sich eine sehr gute mechanische Verbindung sowie eine hohe Wärmeleitfähigkeit.

In vorteilhafter Weiterbildung der Erfindung kann das Gitter aus einem Drahtgeflecht oder auch aus einem gestanzten Blech aus Messing, Aluminium oder Kupfer, d. h. mit guter elektrischer Leitfähigkeit bestehen. Für beide Ausbildungen ist es vorteilhaft, wenn das Gitter eine hohe Biegesteifigkeit aufweist, sodass eine Berührung zwischen Gitter und Stirnfläche zur Vermeidung eines Kurzschlusses sicher vermieden wird.

Nach einer weiteren vorteilhaften Ausgestaltung der Erfindung ist das Gitter in einzlene Zonen unterteilt, die als Streifen ausgebildet und parallel zueinander angeordnet sind, d. h. parallel zum Verlauf der Rohre des Heizkörpers. Dadurch ist es möglich, nur einzelne Zonen zu beheizen und damit die Heizleistung der Zusatzheizung zu variieren bzw. dem Bedarf anzupassen. Die Stromzuführungen für die einzelnen Zonen werden in einem Steckerkasten, der mit dem Heizkörper integriert sein kann, zusammengeführt. Vorteilhafterweise sind die Rippen des Heizkörpers mit einem Minuskontakt, d. h. mit der Masse des Kraftfahrzeuges verbunden.

Nach einer weiteren vorteilhaften Ausgestaltung sind die PTC-Elemente etwa gleichmäßig über die Stirnfläche verteilt, z. B. in einer zick-zack-förmigen Anordnung, d. h. in Richtung der Rohre gesehen jeweils versetzt. Es kann jedoch auch vorteilhaft sein, die PTC-Elemente in einer Reihe und zwischen jeweils zwei Rohrreihen anzuordnen. Dadurch wird eine Wärmeleitung in die Rippenbereiche zwischen den Heizungsrohren bewirkt, d. h. die Wärme fließt vornehmlich in die Rippen und wird damit an die Luft und nicht an die Rohre bzw. das durch die Rohre fließende Kühlmittel übertragen, was nicht erwünscht ist. Durch die gleichmäßige Verteilung der Heizelemente über die gesamte Stirnfläche wird auch Heizleistung eingespart, da die durch den Heizkörper strömende Luft gleichmäßig erwärmt wird und nicht - wie beim Stand der Technik - nur in einzelnen konzentrierten Bereichen. Insgesamt bietet diese integrierte Zusatzheizung gegenüber dem Stand der Technik Gewichts- und Kostenvorteile und ist darüber hinaus universell verwendbar.

Ein Ausführungsbeispiel der Erfindung ist in der Zeichnung dargestellt und wird im Folgenden näher beschrieben. Es zeigen
- Fig. 1: eine perspektivische Ansicht eines Heizkörpers mit Gitter,
- Fig. 2: eine weitere perspektivische Ansicht des Heizkörpers aus anderer Richtung,
- Fig. 3: eine Seitenansicht des Heizkörpers,
- Fig. 4: eine Einzelheit X aus Fig. 3,
- Fig. 5: eine Draufsicht auf den Heizkörper und das Gitter und
- Fig. 6: eine Einzelheit Y aus Fig. 5.

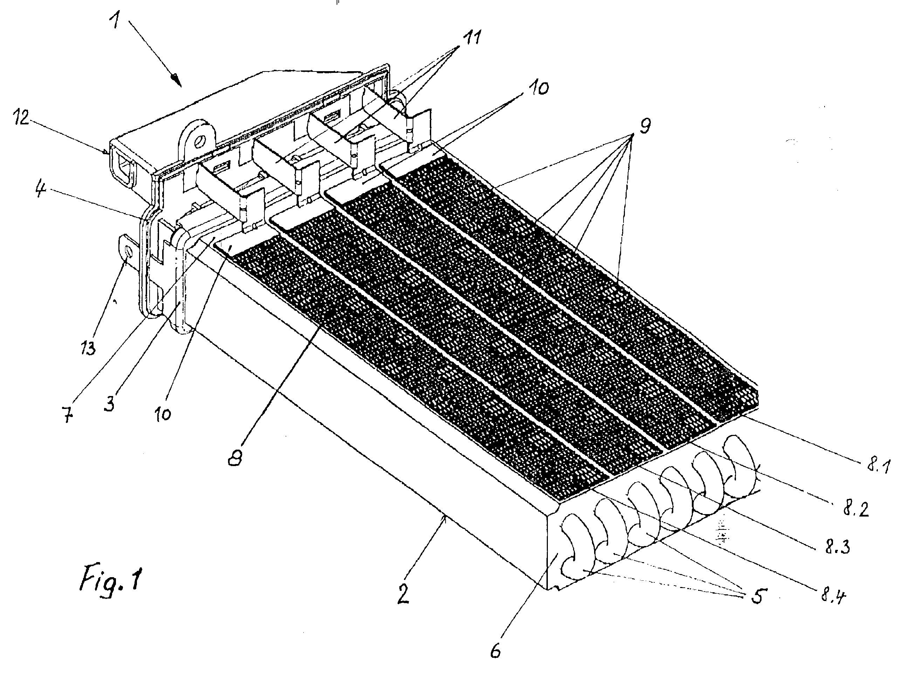

**Fig. 1** zeigt einen mechanisch gefügten Rundrohr-Heizkörper 1 mit einem Heizkörpernetz 2, einem Rohrboden 3 und einem Wasserkasten 4, der aus Kunststoff hergestellt ist. Das Netz 2 weist Rundrohre auf, von denen lediglich Rohrbögen 5 erkennbar sind. Jeder Rohrbogen 5 ist Teil einer nicht sichtbaren Rohrgabel, deren Enden im Rohrboden 3 befestigt und abgedichtet sind. Die Rohrgabeln mit den Rohrbögen 5 stecken in Rippen, von denen die unterste, d. d. die dem Rohrboden 3 abgewandte mit der Bezugsziffer 6 versehen ist. Rohre und Rippen sind mechanisch gefügt (ohne Löten) und bilden das Netz 2. Letzteres weist eine in der Zeichnung oben liegende Stirnfläche 7 auf, die durch ein Gitter 8, bestehend aus vier Zonen 8.1, 8.2, 8.3, 8.4, abgedeckt ist. Unterhalb des Gitters 8 und oberhalb der Stirnfläche 7 sind (etwas schwach erkennbar) rechteckige PTC-Elemente 9, gleichmäßig über die Stirnfläche 7 verteilt, angeordnet. Die Gitterzonen 8.1 bis 8.4 sind als metallische gestanzte Streifen aus Messing- oder Aluminiumblech hergestellt und stirnseitig mit einem elektrischen Anschlussteil 10 verbunden. An die Anschlussteile 10 schließen sich jeweils streifenförmige Leiter 11 an, die in einen am Wasserkasten 4 angeordneten Steckerkasten 12 münden. Die Leiter 11 sind im Steckerkasten mit einem nicht dargestellten Stromversorgungskabel verbunden, welches aus dem nicht dargestellten Bordnetz (Pluspol) des Kraftfahrzeuges versorgt wird. Am Rohrboden 3, der in metallischem und damit elektrisch leitenden Kontakt mit den Rippen 6 steht, ist an der Schmalseite eine Kontaktfahne 13 angeordnet, die durch eine Öffnung im Kunststoffwasserkasten 4 nach außen geführt ist. Diese Kontaktfahne 13 bildet den Minuspol und wird an Masse angeschlossen.

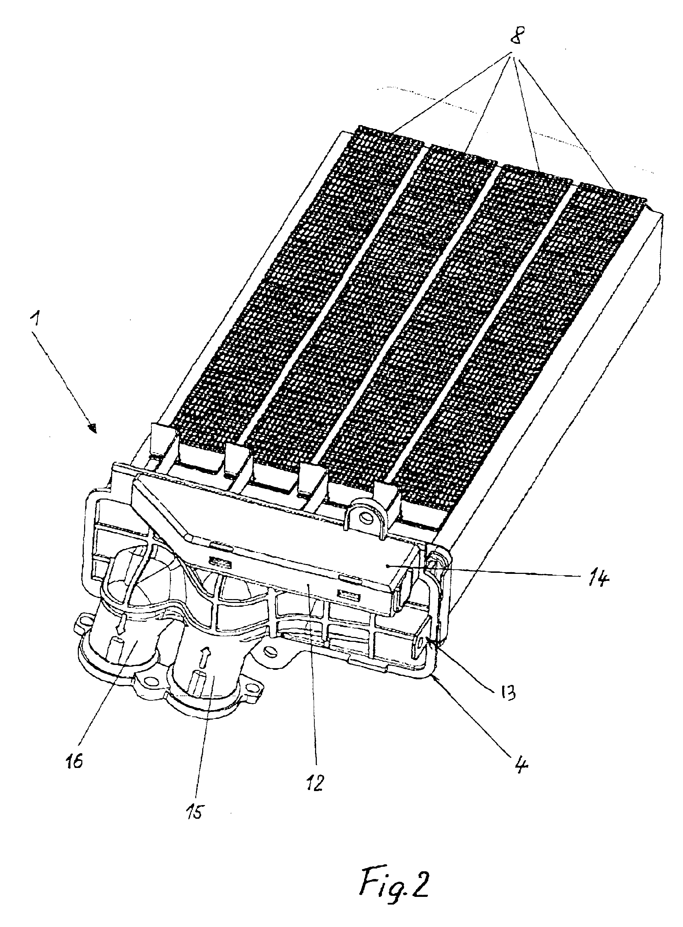

**Fig. 2** zeigt eine weitere perspektivische Ansicht des Rundrohrheizkörpers 1 mit Blick auf den Wasserkasten 4, welcher einen Eintrittsstutzen 15 und einen Austrittsstutzen 16 für ein flüssiges Wärmeträgermedium aufweist. Der Heizkörper 1 ist über diese beiden Stutzen 15, 16 an einen nicht dargestellten Kühlmittelkreislauf einer Brennkraftmaschine des Kraftfahrzeuges angeschlossen. Im Wasserkasten 4 befindet sich - nicht sichtbar - eine Längstrennwand, die den Wasserkasten in eine nicht dargestellte Eintritts- und eine Austrittskammer unterteilt. Letztere stehen mit den Schenkeln der Rohrgabeln 5 in Verbindung, sodass der Heizkörper vom Kühlmittel zweimal durchströmt wird, einmal auf der Vorderseite und einmal auf der Rückseite bzw. - je nach Einbau - umgekehrt. Der Steckerkasten 12 ist größtenteils einstückig mit dem Wasserkasten 4 verbunden, d. h. ebenfalls aus Kunststoff gespritzt. Ledigleich ein Deckel 14 ist als separates Teil ausgebildet und wird nach der Montage des nicht dargestellten Stromanschlusskabels auf den Steckerkasten 12 aufgesetzt und mit diesem verclipst. Der gesamte Heizkörper 1 wird - wie bekannt - in eine Heizungs- oder Klimaanlage eines Kraftfahrzeuges in einen nicht dargestellten Luftströmungskanal eingebaut und dort von Luft durchströmt. Der Heizkörper 1 wird vorzugsweise so eingebaut, dass sich das Gitter 8 auf der Luftaustrittsseite befindet. Die sich daraus ergebenden Vorteile werden unten erläutert.

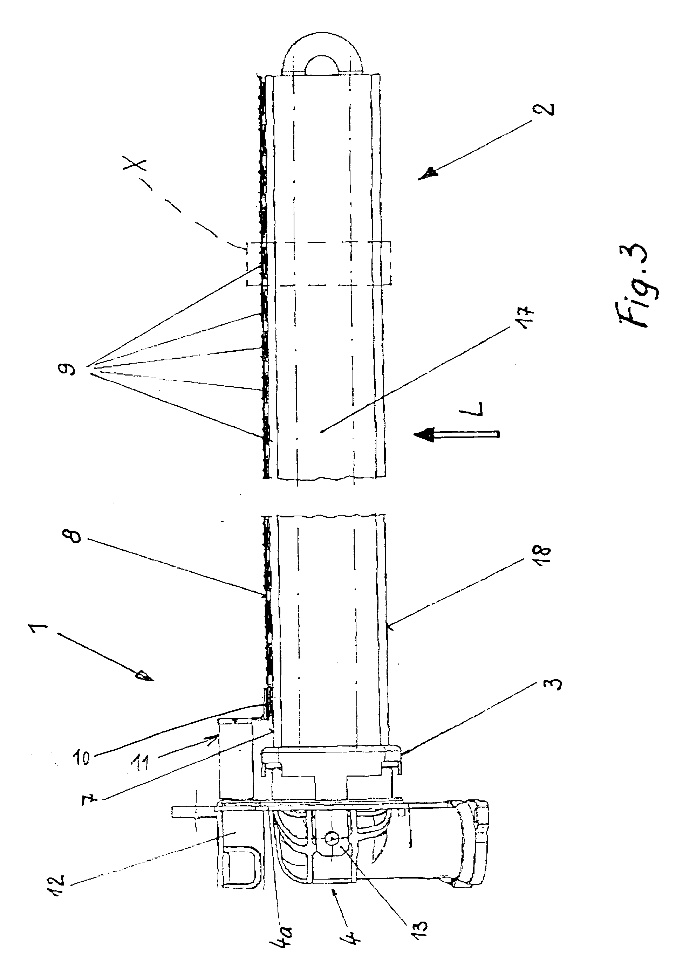

**Fig. 3** zeigt den Heizkörper 1 von der Seite, d. h. mit Blick auf eine Seitenfläche 17 bzw. Schmalseite des Netzes 2. Die Luftströmungsrichtung ist mit einem Pfeil L gekennzeichnet. Die Luft tritt also zunächst über eine Stirnfläche 18 in das Netz 2 ein und tritt über die Stirnfläche 7 aus dem Netz 2 aus. In der Zeichnung oberhalb der Stirnfläche 7 ist das Gitter 8 mit einem geringen Abstand und parallel zur Stirnfläche 7 angeordnet. Zwischen dem Gitter 8 und der Stirnfläche 7 befinden sich in etwa gleichmäßigen Abständen die PTC-Heizelemente 9, d. h. die PTC-Elemente weisen eine Höhe auf, die dem Abstand zwischen Gitter 8 und Stirnfläche 7 entspricht. Dieser Abstand beträgt etwa 2 bis 5 mm. Im Übrigen erkennt man aus dieser Seitenansicht deutlich die Ausbildung der Kontaktfahne 13 und ihre einstückige Verbindung mit dem metallischen Rohrboden 3. Der Steckerkasten 12 befindet sich seitlich neben dem eigentlichen Wasserkasten 4 und ist mit dem Wasserkasten über einen gemeinsamen umlaufenden Flansch 4a verbunden. Eine Einzelheit X ist durch gestrichelte Linien gekennzeichnet und wird im Folgenden beschrieben.

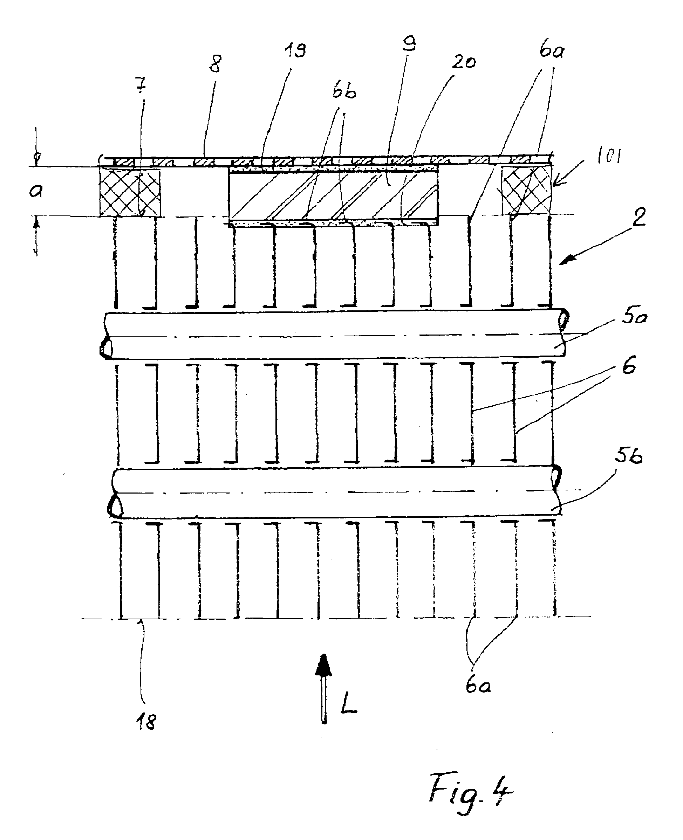

**Fig. 4** zeigt diese Einzelheit X aus Fig. 3, d. h. im Wesentlichen die Verbindung eines PTC-Heizelementes 9 mit dem Gitter 8 und dem Netz 2, welches als Ausschnitt zwischen lufteinstrittseitiger Stirnfläche 18 und luftaustrittsseitiger Stirnfläche 7 dargestellt ist. Es besteht aus parallel zueinander angeordneten, im Wesentlichen eben ausgebildeten Rippen 6, die von zwei Schenkeln 5a, 5b der Rohrgabel 5 (vgl. Fig. 1) durchsetzt werden. Rippen 6 und Rohre 5a, 5b sind mechanisch gefügt, d. h. z. B. durch Aufweitung der Rohre 5a, 5b mit den Rippen 6 verbunden. Die Rippen bestehen aus Aluminium, sind relativ dünn und weisen einen geringen Abstand zueinander auf bzw. eine hohe Rippendichte, die etwa im Bereich von 50 bis 60 Rippen pro dm liegt Die Rippen 6 weisen endseitig Stirnkanten 6a auf, die insgesamt jeweils die Stirnflächen 7 und 18 bilden bzw. die Ebene der Stirnflächen 7, 18 aufspannen. Zwischen dem PTC-Element 9 und dem Gitter 8 ist eine dünne Schicht 19 aus einem ersten Verbindungsmaterial, vorzugsweise einem elektrisch leitenden Kleber angeordnet. Durch diese Kleberschicht 19 werden die PTC-Elemente 9 einerseits mit dem Gitter 8 mechanisch verbunden - andererseits wird damit ein guter elektrisch leitender Kontakt zwischen dem Gitter 8 und dem PTC-Element 9 hergestellt. Das PTC-Element 9 ist vorzugsweise quaderförmig ausgebildet und weist etwa die Abmessung 8 x 32 x 1,4 mm auf. Zwischen Gitter 8 und Stirnfläche 7 besteht ein Abstand a, der etwa der Höhe der PTC-Elemente entspricht, hier also ca. 1,4 mm. Die Länge von 32 mm erstreckt sich in Richtung der Rohre 5a, 5b. Das PTC-Element 9 liegt andererseits auf der Stirnfläche 7 auf, wobei hier die Rippenenden 6a zu etwa rechtwinklig abgebogenen Rippenenden 6b verformt sind. Im Bereich dieser abgewinkelten Rippenenden 6b ist eine zweite Schicht 20 aus einem Verbindungsmaterial angeordnet, die ebenfalls aus einem elektrisch leitfähigen Kleber besteht. Damit wird einerseits eine verbesserte mechanische Verbindung und andererseits eine gute elektrische Leitfähigkeit hergestellt. Bei Einschaltung der Zusatzheizung fließt also Strom vom Gitter 8 (Pluspol) über die Verbindungsschicht 19 in das PTC-Element 9 und über die zweite Schicht 20 in die Rippen 6. Von dort fließt der Strom über den metallischen Kontakt mit den Rohren 5a, 5b in den hier nicht dargestellten Rohrboden 3, an welchem sich die Kontaktzunge 13 für den Minuspol bzw. Masseanschluss befindet. Zusätzlich ist im dargestellten Ausführungsbeispiel ein Isolierrahmen 101 zur elektrischen Isolierung des Gitters 8 vom Netz 2 vorhanden. Zudem sorgt der Isolierrahmen für einen gleichbleibenden Abstand a zwischen dem Gitter 8 und dem Netz 2. Durch den Isolierrahmen wird sichergestellt, dass auch bei einer mechanischen Verformung des Netzes, die beispielsweise durch Montage, Lagerung oder Transport des Heizkörpers auftreten können, ein Kurzschluß vermieden wird.

Das hier dargestellte Netz 2 eines Rundrohrheizkörpers entspricht einer Serienausführung, die auch ohne Zusatzheizung Verwendung findet. Das Netz 2 muss somit in keiner Weise an die Zusatzheizung in Form des Gitters 3 mit dem PTC-Elemtenen 9 angepasst werden. Vielmehr wird das Gitter 8, an welchen die PTC-Elemente 9 bereits durch die Klebeschicht 19 befestigt sind, unter leichtem Druck auf die Stirnfläche 7 aufgelegt, sodass sich die PTC-Elemente 9 in die Stirnfläche 7 eindrücken und damit die Verformung der Rippenenden zu abgewinkelten Rippenenden 6b bewirken. Dabei kann die zweite Schicht 20 bereits auf die PTC-Elemente 9 aufgetragen sein, sodass sich die Rippenenden 6b in diese Schicht 20 "eingraben" und damit eine sehr gute mechanische und elektrische Verbindung herstellen. Das Gitter 8 ist so dimensioniert, dass es unter Berücksichtigung der Abstützpunkte durch die PTC-Elemente 9 eine hinreichende Biegesteifigkeit aufweist, damit ein Kontakt zwischen Gitter 8 und Stirnfläche 7 bzw. Rippen 6 sicher vermieden wird. Ein solches "Durchhängen" oder Durchbiegen des Gitters wird durch die relativ kurzen Abstände der PTC-Elemente erschwert. Andererseits soll das Gitter 8 auch relativ "offen" sein, um einen möglichst geringen Druckabfall für die Luft zu erzeugen.

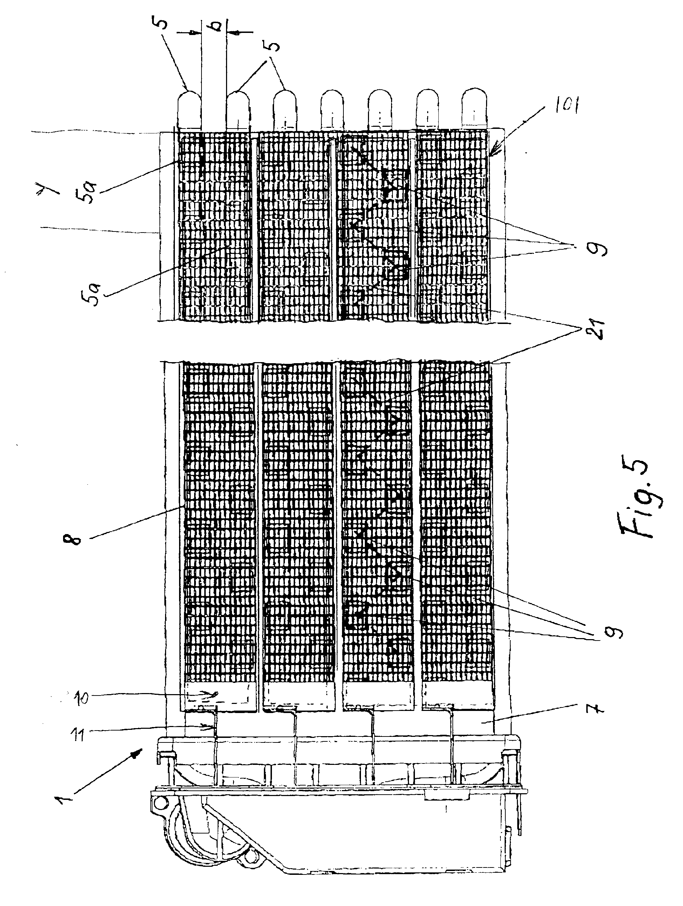

**Fig. 5** zeigt eine Draufsicht auf den Heizkörper 1, d. h. auf die luftaustrittsseitige Stirnfläche 7 mit Gitter 8. Wie bereits oben erwähnt, ist dieses Gitter 8 in vier Zonen 8.1, 8.2, 8.3, 8.4 unterteilt, die jeweils einzeln und unabhängig voneinander beheizbar bzw. bestrombar sind. Die einzelnen PTC-Elemente 9 können nach unterschiedlichen Mustern angeordnet werden - hier sind die PTC-Elemente zick-zack-förmig angeordnet, was durch eine gestrichelte Linie 21 angedeutet ist. Ferner ist durch gestrichelte Linien der Verlauf der Rohrschenkel 5a der Rohrgabeln 5 dargestellt. Es ist auch möglich, in Abweichung der Darstellung in Fig. 5 die PTC-Elemente 9 zwischen zwei Rohre 5a, d. h. in einem Gitterstreifen der Breite b anzuordnen. Der von den PTC-Elementen 9 ausgehende Wärmeeintrag in die Rippen 6 verläuft dann zwischen den Rohren 5a hindurch und wird dadurch in erster Linie an die Luft abgegeben und weniger an das Kühlmittel, welches die Rohre 5a durchströmt. Der gleiche Gesichtspunkt gilt für die Anordnung der PTC-Elemente 9 bzw. des Gitters 8 auf der Luftaustrittsseite, d. h. der Stirnfläche 7 des Heizkörpers 1. Bei einer umgekehrten Anordnung würde die durch die PTC-Elemente 9 erwärmte Luft auch auf die Rohre treffen und damit das Kühlmittel erwärmen, was im Falle einer reinen Zusatzheizung nicht erwünscht ist. Vielmehr soll nur die Luft erwärmt werden, weil dadurch eine schnellere und effektivere Heizwirkung zur Beheizung des Fahrgastraumes erzielt wird. Eine Einzelheit Y ist durch gestrichelte Linien gekennzeichnet und wird im Folgenden beschrieben.

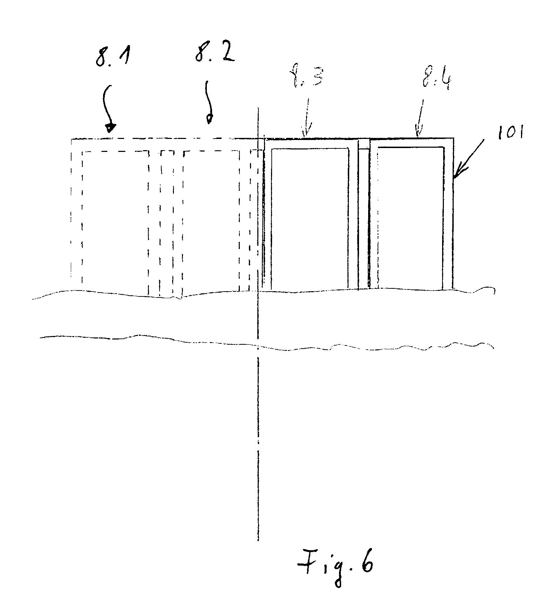

**Fig. 6** zeigt diese Einzelheit Y aus Fig. 5, d. h. einen Isolierrahmen 101, der zwischen Gitter 8 und Netz 2 angeordnet ist, wobei im dargestellten Ausführungsbeispiel der Isolierrahmen 101 aus mehreren Isolierrahmenteilen aufgebaut ist, die jeweils zwischen einer der Zonen 8.1, 8.2, 8.3, 8.4 des Gitters 8 und dem Netz 2 angeordnet sind, um ein Kurzschlußrisiko zu minimieren. Der Isolierrahmen 101 sorgt also für eine elektrische Isolation und einen festgelegten Abstand zwischen dem Gitter 8 und dem Netz 2.

Die erfindungsgemäße Zusatzheizung wurde beispielhaft anhand eines mechanisch gefügten Rundrohrheizkörpers erläutert, für den diese Art der Zusatzheizung außerordentlich vorteilhaft ist. Andererseits kann die erfindungsgemäße Zusatzheizung in Form eines Gitters mit PTC-Elementen auch für andere Netzbauweisen, z. B. gelötete Netze, die in der Regel aus Flachrohren und Wellrippen bestehen, Anwendung finden. Grundsätzlich können die PTC-Elemente in gleicher Weise - wie oben beschrieben - z. B. durch Kleber mit den Wellrippen verbunden werden. Möglich ist jedoch auch, die PTC-Elemente mit den Wellrippen zu verlöten, was gleichzeitig mit dem Verlöten des Heizkörperblockes einschließlich Rohrboden erfolgen kann. Der Wasserkasten aus Kunststoff wird nach dem Lötprozess - wie bekannt - durch eine Bördelverbindung und Gummidichtung mit dem Rohrboden verbunden. Somit zeigt sich, dass diese Art der Zusatzheizung für die gängigen Bauweisen von Heizkörpernetzen verwendbar ist, und zwar ohne dass die Netze gegenüber ihrer Ausführung ohne Zusatzheizung verändert oder angepasst werden müssten.

## Patentansprüche

1. Heizkörper für Kraftfahrzeuge mit integrierter elektrischer Zusatzheizung, wobei der Heizkörper (1) ein aus Rohren und Rippen bestehendes Netz (2) mit Stirnflächen für den Lufteintritt (18) und für den Luftaustritt (7) aufweist und wobei die Zusatzheizung Heizelemente (9) aufweist, die in wärmeleitender Verbindung mit den Rippen (6) stehen, **dadurch gekennzeichnet, dass** die Heizelemente (9) auf einer Stirnfläche, insbesondere auf der Stirnfläche (7) für den Luftaustritt angeordnet und durch eine elektrisch leitendes Gitter am Netz (2) befestigt sind.

2. Heizkörper nach Anspruch 1, **dadurch gekennzeichnet, dass** das Netz gelötet ist.

3. Heizkörper nach Anspruch 1, **dadurch gekennzeichnet, dass** das Netz (2) mechanisch gefügt ist.

4. Heizkörper nach Anspruch 2, **dadurch gekennzeichnet, dass** das Netz Flachrohre und Wellrippen aufweist.

5. Heizkörper nach Anspruch 3, **dadurch gekennzeichnet, dass** das Netz (2) Rundrohre (5, 5a, 5b) oder Ovalrohre und Flachrippen (6) aufweist.

6. Heizkörper nach einem der Ansprüche 1 bis 5, **dadurch gekennzeichnet, dass** die Heizelemente als PTC-Elemente (9) ausgebildet sind.

7. Heizkörper nach Anspruch 6, **dadurch gekennzeichnet, dass** die PTC-Elemente (9) flach ausgebildet sind und parallele Flachseiten aufweisen, die einerseits mit der Stirnfläche (7) und andererseits mit dem Gitter (8) in elektrisch leitender Verbindung stehen.

8. Heizkörper nach Anspruch 7, **dadurch gekennzeichnet, dass** die Stirnfläche (7) durch Stirnkanten (6a) der Rippen (6) gebildet und dass die Stirnkanten (6b) im Bereich der PTC-Elemente (9) verformt, insbesondere abgewinkelt sind.

9. Heizkörper nach einem der Ansprüche 1 bis 8, **dadurch gekennzeichnet, dass** zwischen den Heizelementen (9) und dem Gitter (8) ein elektrisch leitendes Verbindungsmaterial (19) angeordnet ist.

10. Heizkörper nach einem der Ansprüche 1 bis 9, **dadurch gekennzeichnet, dass** zwischen den Heizelementen (9) und der Stirnfläche (7) ein elektrisch leitendes oder ein isolierendes Verbindungsmaterial (20) angeordnet ist.

11. Heizkörper nach Anspruch 9 oder 10, **dadurch gekennzeichnet, dass** das Verbindungsmaterial ein Silikonkleber ist.

12. Heizkörper nach Anspruch 10, **dadurch gekennzeichnet, dass** das Verbindungsmaterial ein Lot bzw. eine Lotschicht ist.

13. Heizkörper nach einem der Ansprüche 1 bis 12, **dadurch gekennzeichnet, dass** das Gitter (8) aus einem Drahtgeflecht besteht.

14. Heizkörper nach Anspruch 12, **dadurch gekennzeichnet, dass** das Gitter (8) aus einer Blechplatine gestanzt ist.

15. Heizkörper nach Anspruch 13 oder 14, **dadurch gekennzeichnet, dass** das Gitter (8) biegesteif ausgebildet ist.

16. Heizkörper nach einem der Ansprüche 1 bis 15, **dadurch gekennzeichnet, dass** das Gitter (8) in Zonen (8.1, 8.2, 8.3, 8.4) unterteilt ist, die als parallel zueinander angeordnete, elektrisch separat ansteuerbare Gitterstreifen ausgebildet sind.

17. Heizkörper nach einem der Ansprüche 1 bis 16, **dadurch gekennzeichnet, dass** mit dem Heizkörper (1) ein elektrischer Steckerkasten (12) für die Stromversorgung und die Beheizung der Heizelemente (9) verbunden ist.

18. Heizkörper nach Anspruch 17, **dadurch gekennzeichnet, dass** das Gitter (8) an mindestens einen unabhängigen Pluspol und das Netz (2) über eine Kontaktfahne (13) an einen Minuspol angeschlossen ist.

19. Heizkörper nach einem der Ansprüche 1 bis 18, **dadurch gekennzeichnet, dass** die Heizelemente (9) gleichmäßig, insbesondere entlang einer Zick-Zack-Linie (21) über die Stirnfläche (7) verteilt sind.

20. Heizkörper nach Anspruch 19, **dadurch gekennzeichnet, dass** die Heizelemente (9) zwischen zwei Rohrreihen (5a) auf einem Gitterstreifen der Breite b angeordnet sind.

21. Heizkörper nach einem der Ansprüche 1 bis 20, **dadurch gekennzeichnet, dass** das Gitter (8) elektrisch und mechanisch über Anschlußteile (10) mit einem Leiter (11) verbunden ist.

22. Heizkörper nach Anspruch 21, **dadurch gekennzeichnet, dass** die Verbindung eine Lötverbindung ist.

23. Heizkörper nach einem der Ansprüche 1 bis 22, **dadurch gekennzeichnet, dass** zwischen dem Gitter (8) und dem Netz (2) ein Isolierrahmen (101) angeordnet ist.

## Claims

1. A heat exchanger for motor vehicles with supplementary integrated electrical heating, the heat exchanger (1) having a network (2) consisting of tubes and ribs with front faces for the air inlet (18) and the air outlet (7), and the supplementary heating having heating elements (9) which are connected to the ribs (6) in such a manner as to conduct heat,
**characterised in that**
the heating elements (9) are positioned on a front face, in particular on the front face (7) for the air outlet and affixed to the network (2) by means of an electrically conductive grid.

2. A heat exchanger in accordance with claim 1,
**characterised in that**
the network (2) is soldered.

3. A heat exchanger in accordance with claim 1,
**characterised in that**
the network (2) is joined mechanically.

4. A heat exchanger in accordance with claim 2,
**characterised in that**
the network has flat tubes and corrugated ribs.

5. A heat exchanger in accordance with claim 3,
**characterised in that**
the network (2) has circular tubes (5, 5a, 5b) or oval tubes and flat ribs (6).

6. A heat exchanger in accordance with one of claims 1 to 5,
**characterised in that**
the heating elements as designed as PTC elements (9).

7. A heat exchanger in accordance with claim 6,
**characterised in that**
the PTC elements (9) are flat in design and have parallel flat sides which are connected in such a manner as to conduct electricity to the front face (7) on one hand and to the grid (8) on the other.

8. A heat exchanger in accordance with claim 7,
**characterised in that**
the front face (7) is formed by front edges (6a) of the ribs (6) and the front edges (6b) are shaped, particularly angled in the area of the PTC elements (9).

9. A heat exchanger in accordance with one of claims 1 to 8,
**characterised in that**
positioned between the heating elements (9) and the grid (8) is an electrically conductive connecting material (19).

10. A heat exchanger in accordance with one of claims 1 to 9,
**characterised in that**
positioned between the heating elements (9) and the front face (7) is an electrically conductive or insulating connecting material (20).

11. A heat exchanger in accordance with claim 9 or 10,
**characterised in that**
the connecting material is a silicon adhesive.

12. A heat exchanger in accordance with claim 10,
**characterised in that**
the connecting material is solder or a layer of solder.

13. A heat exchanger in accordance with one of claims 1 to 12,
**characterised in that**
the grid (8) consists of a wire mesh.

14. A heat exchanger in accordance with claim 12,
**characterised in that**
the grid (8) is stamped out of a steel sheet.

15. A heat exchanger in accordance with claim 13 or 14,
**characterised in that**
the grid (8) is designed to be resistant to bending.

16. A heat exchanger in accordance with one of claims 1 to 15,
**characterised in that**
the grid (8) is subdivided into zones (8.1, 8.2, 8.3, 8.4) which are designed as grid strips positioned parallel to one another which can be actuated separately electrically.

17. A heat exchanger in accordance with one of claims 1 to 16,
**characterised in that**
connected to the heat exchanger (1) is an electric connector box (12) for the power supply and for heating the heating elements (9).

18. A heat exchanger in accordance with claim 17,
**characterised in that**
the grid (8) is connected to at least one independent positive pole, and the network (2) is connected to a negative pole by a contact tab (13).

19. A heat exchanger in accordance with one of claims 1 to 18,
**characterised in that**
the heating elements (9) are distributed evenly across the front face (7), particularly along a zig-zag line (21).

20. A heat exchanger in accordance with claim 19,
**characterised in that**
the heating elements (9) are positioned between the rows of tubes (5a) on a grid strip of width b.

21. A heat exchanger in accordance with one of claims 1 to 20,
**characterised in that**
the grid (8) is connected electrically and mechanically to a conductor (11) by connecting parts (10).

22. A heat exchanger in accordance with claim 21,
**characterised in that**
the connection is a soldered connection.

23. A heat exchanger in accordance with one of claims 1 to 22,
**characterised in that**
an insulating frame (101) is positioned between the grid (8) and the network (2).

## Revendications

1. Radiateur pour des véhicules automobiles, comprenant un chauffage électrique supplémentaire intégré, où le radiateur (1) présente un bloc d'alimentation (2) se composant de tubes et d'ailettes, comprenant des surfaces frontales pour l'entrée d'air (18) et pour la sortie d'air (7), et où le chauffage supplémentaire présente des éléments chauffants (9) qui sont en liaison thermoconductrice avec les ailettes (6), **caractérisé en ce que** les éléments chauffants (9) sont disposés sur une surface frontale, en particulier sur la surface frontale (7) pour la sortie d'air, et fixés sur le bloc d'alimentation (2), par une grille électroconductrice.

2. Radiateur selon la revendication 1, **caractérisé en ce que** le bloc d'alimentation est brasé.

3. Radiateur selon la revendication 1, **caractérisé en ce que** le bloc d'alimentation (2) est jointé mécaniquement.

4. Radiateur selon la revendication 2, **caractérisé en ce que** le bloc d'alimentation présente des tubes plats et des ailettes ondulées.

5. Radiateur selon la revendication 3, **caractérisé en ce que** le bloc d'alimentation (2) présente des tubes ronds (5, 5a, 5b) ou des tubes ovales et des ailettes plates (6).

6. Radiateur selon l'une quelconque des revendications 1 à 5, **caractérisé en ce que** les éléments chauffants sont conçus comme des éléments (9) à coefficient positif de température (CPT).

7. Radiateur selon la revendication 6, **caractérisé en ce que** les éléments CPT (9) sont configurés de manière plate et présentent des côtés plats parallèles qui sont en liaison électroconductrice, d'une part avec la surface frontale (7) et d'autre part avec la grille (8).

8. Radiateur selon la revendication 7, **caractérisé en ce que** la surface frontale (7) est formée par des arêtes frontales (6a) des ailettes (6), et **en ce que** les arêtes frontales (6b) sont déformées, en particulier coudées dans la zone des éléments CPT (9).

9. Radiateur selon l'une quelconque des revendications 1 à 8, **caractérisé en ce qu'**un matériau de fixation électroconducteur (19) est disposé entre les éléments chauffants (9) et la grille (8).

10. Radiateur selon l'une quelconque des revendications 1 à 9, **caractérisé en ce qu'**un matériau de fixation électroconducteur ou isolant (20) est disposé entre les éléments chauffants (9) et la surface frontale (7).

11. Radiateur selon la revendication 9 ou 10, **caractérisé en ce que** le matériau de fixation est une colle à base de silicone.

12. Radiateur selon la revendication 10, **caractérisé en ce que** le matériau de fixation est un métal d'apport de brasage ou une couche de métal d'apport de brasage.

13. Radiateur selon l'une quelconque des revendications 1 à 12, **caractérisé en ce que** la grille (8) se compose d'un treillis en fil métallique.

14. Radiateur selon la revendication 12, **caractérisé en ce que** la grille (8) est découpée à partir d'un larget pour tôles.

15. Radiateur selon la revendication 13 ou 14, **caractérisé en ce que** la grille (8) est configurée en étant rigide à la flexion.

16. Radiateur selon l'une quelconque des revendications 1 à 15, **caractérisé en ce que** la grille (8) est subdivisée en zones (8.1, 8.2, 8.3, 8.4) qui sont configurées comme des bandes de grille disposées en étant parallèles entre elles et pouvant être commandées électriquement de façon séparée.

17. Radiateur selon l'une quelconque des revendications 1 à 16, **caractérisé en ce qu'**un coffret de connexion électrique (12) prévu pour l'alimentation en courant électrique et pour le chauffage des éléments chauffants (9) est connecté au radiateur (1).

18. Radiateur selon la revendication 17, **caractérisé en ce que** la grille (8) est raccordée à au moins un pôle positif indépendant, et le bloc d'alimentation (2) est raccordé à un pôle négatif, par une patte de contact (13).

19. Radiateur selon l'une quelconque des revendications 1 à 18, **caractérisé en ce que** les éléments chauffants (9) sont répartis sur la surface frontale (7), de façon uniforme, en particulier le long d'une ligne en zigzag (21).

20. Radiateur selon la revendication 19, **caractérisé en ce que** les éléments chauffants (9), entre deux rangées de tubes (5a), sont disposés sur une bande de grille d'une largeur b.

21. Radiateur selon l'une quelconque des revendications 1 à 20, **caractérisé en ce que** la grille (8) est raccordée électriquement et mécaniquement à un conducteur (11), par des pièces de raccordement (10).

22. Radiateur selon la revendication 21, **caractérisé en ce que** la connexion est une connexion brasée.

23. Radiateur selon l'une quelconque des revendications 1 à 22, **caractérisé en ce qu'**un cadre isolant (101) est disposé entre la grille (8) et le bloc d'alimentation (2).
